# FASCICULE DE BREVET EUROPEEN

(11) **EP 3 538 294 B1**
(45) Date de publication et mention de la délivrance du brevet: **03.01.2024**
(21) Numéro de dépôt: 17794335.4
(22) Date de dépôt: 07.11.2017
(51) Int. Cl.: B22F 12/60, B22F 12/70, B33Y 40/00, B33Y 30/00, B29C 64/25, B29C 64/364, B22F 10/28

(54) **MACHINE DE FABRICATION ADDITIVE A DOUBLE PEAU**
MASCHINE ZUR GENERATIVEN FERTIGUNG EINER DOPPELHAUT
DOUBLE-SKIN ADDITIVE MANUFACTURING MACHINE

(30) Priorité: 10.11.2016 FR 1660922
(43) Date de publication de la demande: 18.09.2019
(73) Titulaire: AddUp, 63118 Cébazat (FR)
(72) Inventeur: SARTORI, Jean-François, 63118 Cebazat (FR)
(74) Mandataire: Barascou, Frédéric
(86) Numéro de dépôt international: PCT/EP2017/078469
(87) Numéro de publication internationale: WO 2018/087088

(56) Documents cités:
- EP-A1- 3 147 047
- EP-A1- 3 147 047
- CN-A- 104 963 439
- CN-A- 104 963 439
- DE-A1-102010 052 206
- FR-A1- 2 385 060
- JP-A- 2012 117 679
- JP-A- 2012 117 679
- JP-A- 2015 196 856
- US-A1- 2002 090 313
- US-A1- 2002 090 313
- US-A1- 2008 131 546
- US-A1- 2008 131 546

## Description

L'invention se situe dans le domaine de la fabrication additive à base de poudre par fusion des grains de cette poudre à l'aide d'une source d'énergie ou de chaleur comme un faisceau laser, un faisceau d'électrons, ou des diodes par exemple.

Plus précisément, l'invention vise à permettre la fabrication de pièces de meilleure qualité.

L'utilisation de la fusion pour fabriquer des pièces entraîne l'apparition de contraintes résiduelles dans les pièces fabriquées qui peuvent entraîner des défauts dans les pièces fabriquées ou même la rupture de certaines parties des pièces fabriquées.

Lorsque les pièces fabriquées présentent des défauts, elles sont mises au rebut et elles constituent une perte pour le fabricant. De plus, de nouvelles pièces doivent être produites pour répondre aux besoins du client ayant commandé ces pièces.

En revanche, lorsqu'une partie d'une pièce fabriquée se rompt sous l'effet des contraintes résiduelles, il n'est plus possible de continuer à la fabriquer. En effet, comme c'est généralement l'embase de la pièce qui est solidaire du plateau de fabrication additive qui cède, la pièce n'est plus maintenue fixement dans le référentiel de fabrication de la machine.

De plus, dans le cadre de la fabrication additive par dépôt de lit de poudre, la pièce défectueuse qui n'est plus solidaire du plateau de fabrication additive peut se déplacer et venir endommager la raclette ou le rouleau du dispositif permettant de répartir la poudre sur la zone de travail.

Des contraintes résiduelles importantes apparaissant lorsque de forts gradients de température existent entre l'embase de la pièce, solidaire du plateau de fabrication additive, et la section de la pièce en cours de fabrication, il est connu d'utiliser des plateaux de fabrication chauffants ou chauffés par un autre dispositif afin de réduire le gradient de température entre l'embase de la pièce, solidaire du plateau de fabrication additive, et la section de la pièce en cours de fabrication.

Si l'utilisation de plateaux chauffants ou chauffés permet de maîtriser l'apparition des contraintes résiduelles, elle présente néanmoins des inconvénients.

En effet, la chaleur du plateau se transmet aux pièces fabriquées mais aussi à la poudre non consolidée qui les entoure. Donc, une importante quantité de chaleur rayonne depuis la surface de travail à l'intérieur de l'enceinte de fabrication de la machine de fabrication additive.

D'une part, cette chaleur rayonnante vient chauffer toutes les parties de la machine de fabrication additive entourant l'enceinte de fabrication. Notamment, cette chaleur rayonnante est susceptible de chauffer des parties du châssis de la machine supportant la (ou les) source(s) d'énergie ou de chaleur utilisée(s) pour fusionner les grains de poudre et les moyens utilisés pour diriger et déplacer cette (ces) source(s) d'énergie ou de chaleur sur le lit de poudre. En chauffant, ces parties du châssis de la machine se déforment et causent des déplacements de la source d'énergie ou de chaleur réduisant la précision de fabrication et donc la qualité des pièces fabriquées.

De plus, de telles déformations du châssis peuvent aussi entraîner des problèmes d'étanchéité, et donc de dangereuses fuites de poudre ou de gaz inerte. En effet, les poudres de fabrication additive peuvent contenir des composés chimiques ou des métaux toxiques. De plus, les enceintes de fabrication des machines de fabrication additive étant remplies de gaz inerte afin d'éviter l'oxydation de certaines poudres de fabrication additive et les risques d'explosion liés à l'oxydation de certaines de ces poudres oxydables, en cas de fuite, le gaz inerte se répand autour de la machine et les opérateurs présents dans l'atelier où est installée la machine peuvent venir à manquer d'oxygène.

Enfin, la chaleur rayonnant depuis la zone de travail entraîne aussi une montée de la température à l'intérieur de l'enceinte de fabrication additive, ce qui peut entraîner une cristallisation de la poudre néfaste à la qualité du lit de poudre et donc à la qualité des pièces fabriquées. Les publications US 2002/090313 A1, US 2008/131546 A1 et JP 2015 196856 A divulguent des machines de fabrication additive similaires.

Aussi, la présente invention a pour objectif de protéger les parties du châssis de la machine supportant la (ou les) source(s) d'énergie ou de chaleur utilisée(s) pour fusionner les grains de poudre et les moyens utilisés pour diriger et déplacer cette (ces) source(s) d'énergie ou de chaleur sur le lit de poudre de la chaleur rayonnant depuis la surface de travail, notamment dans le cas où la surface de travail se situe au-dessus d'un plateau chauffant ou chauffé par un autre dispositif.

A cet effet, l'invention a pour objet une machine de fabrication additive, cette machine de fabrication additive comprenant une enceinte de fabrication à l'intérieur de laquelle au moins une source de chaleur ou d'énergie est utilisée pour fusionner de la poudre de fabrication additive sur une surface de travail, l'enceinte de fabrication étant formée par au moins un plan de travail, une paroi avant, une paroi arrière, une paroi latérale gauche, une paroi latérale droite, et une paroi supérieure, au moins une de ces parois supportant la source d'énergie ou de chaleur utilisée pour fusionner la poudre de fabrication additive.

Selon l'invention, la machine de fabrication additive comprend une peau intérieure placée à l'intérieur de l'enceinte de fabrication devant chaque paroi supportant la source d'énergie ou de chaleur et à une distance non nulle de chaque paroi supportant la source d'énergie ou de chaleur de manière à créer un volume de circulation pour un flux de gaz entre la peau intérieure et chaque paroi devant laquelle cette peau intérieure est placée, et en ce que la machine de fabrication additive comprend un dispositif de génération d'un flux de gaz relié au volume de circulation

Grâce à la peau intérieure et au flux de gaz qui vient refroidir la peau intérieure, chaque paroi supportant la source d'énergie ou de chaleur est moins soumise à la chaleur rayonnant depuis la surface de travail et donc moins susceptible de se déformer. Ainsi, les pièces peuvent être fabriquées avec précision et d'éventuelles fuites de poudre dues à des problèmes d'étanchéité de l'enceinte de fabrication sont évitées.

Avantageusement, en circulant entre la peau intérieure et les parois de l'enceinte de fabrication, le flux d'air permet aussi de réguler la température dans l'enceinte de fabrication et d'éviter une cristallisation de la poudre sur la surface de travail.

D'autres caractéristiques et avantages de l'invention apparaîtront dans la description qui va suivre. Cette description, se réfère aux dessins joints en annexe sur lesquels :

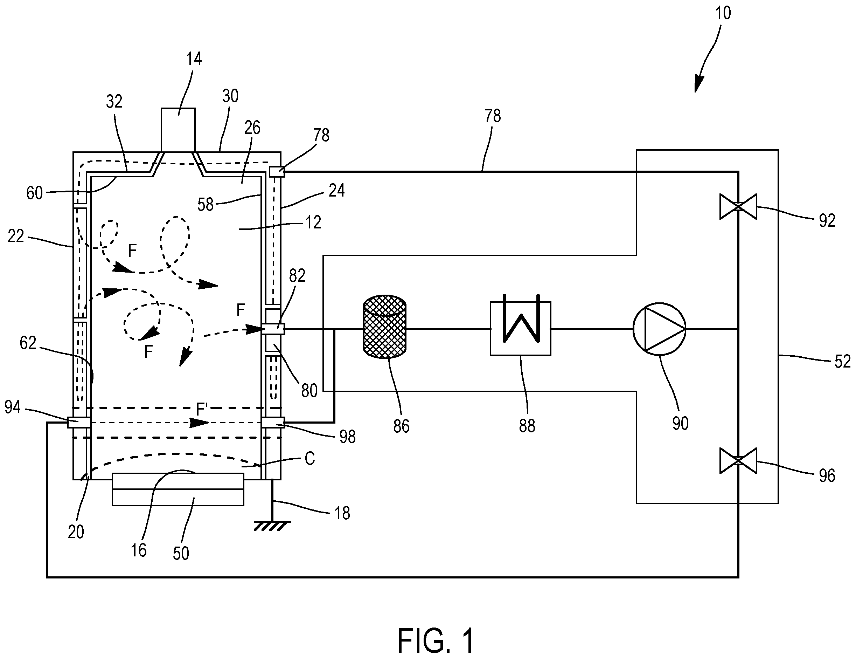

- la figure 1 est une vue schématique d'une machine de fabrication additive selon l'invention,
- la figure 2 est une vue en coupe transversale d'une machine de fabrication additive selon l'invention, et
- la figure 3 est une vue en coupe longitudinale d'une machine de fabrication additive selon l'invention.

L'invention est relative à une machine de fabrication additive 10 utilisant de préférence un procédé de fabrication additive par dépôt de lit de poudre. En effet, avec un tel procédé de fabrication, une importante quantité de poudre non consolidée entoure les pièces fabriquées et donc une importante quantité de chaleur rayonne depuis cette poudre lorsque le plateau de fabrication est chauffé ou chauffant.

La machine selon l'invention peut être utilisée avec de la poudre de fabrication additive de type métallique, ou de type non-métallique et par exemple à base de céramique.

Pour la mise en oeuvre d'un procédé de fabrication additive, la machine de fabrication additive 10 comprend une enceinte de fabrication 12 à l'intérieur de laquelle au moins une source de chaleur ou d'énergie 14 est utilisée pour fusionner la poudre de fabrication additive sur une surface de travail 16. La (ou les) source(s) de chaleur ou d'énergie 14 peut (peuvent) être un faisceau laser, un faisceau d'électrons, et/ou des diodes. De préférence, cette enceinte de fabrication 12 est fermée de manière étanche pendant un cycle de fabrication et elle est remplie avec un gaz inerte, tel l'azote ou l'argon, pour éviter l'oxydation des grains de poudre.

Cette enceinte de fabrication 12 est supportée par un bâti 18 et elle est formée par au moins un plan de travail 20, une paroi avant 22, une paroi arrière 24, une paroi latérale gauche 26, une paroi latérale droite 28, et une paroi supérieure 30. De préférence, ces parois sont reliées de manière étanche. Afin de fournir un accès à l'intérieur de l'enceinte de fabrication 12 pour des opérations de maintenance ou de nettoyage, la paroi latérale gauche 26 et la paroi latérale droite 28 peuvent prendre la forme de portes pouvant être fermées de manière étanche. Parallèlement, et afin de permettre à un opérateur de voir et d'accéder à l'intérieur de l'enceinte de fabrication 12 pour récupérer les pièces fabriquées par exemple, la paroi avant 22 comprend une ouverture 44 refermée par une porte 46, de préférence transparente, et cette paroi avant 22 est équipée d'une boite à gants 48.

Dans le cas d'un procédé de fabrication par dépôt de lit de poudre, la surface de travail 16 prend la forme d'un plateau 34 sur lequel une pluralité de couches de poudre sont étalées. A cet effet, la machine 10 comprend un actionneur 42, tel un vérin, permettant d'élever et d'abaisser le plateau 34 à l'intérieur d'une chemise de fabrication 35 solidaire du bâti 18 de la machine 10 et débouchant dans le plan de travail 20. En outre, la machine 10 comprend aussi au moins un dispositif d'amenée 36 de poudre, par exemple à tiroir, un dispositif d'étalement 38 de poudre, à rouleau ou à raclette par exemple, et un dispositif de déplacement 40, par exemple à poulies et courroies, de ce dispositif d'étalement 38 au-dessus de la surface de travail 16 constituée par le plateau 34. De préférence, un dispositif d'amenée 36 de poudre est prévu de chaque côté du plateau 34, et donc de chaque côté de la surface de travail 16, dans la longueur L10 de la machine.

Afin de limiter l'apparition de contraintes résiduelles dans les pièces fabriquées, le plateau 34 est chauffé, par exemple à une température de 500°C. A cet effet, le plateau 34 intègre un dispositif de production de chaleur, tel une résistance électrique ou une canne chauffante ou un inducteur, ou la machine 10 comprend un dispositif chauffant 50 produisant de la chaleur et la communiquant au plateau de fabrication additive, par exemple par conduction, le dispositif chauffant 50 étant accolé au plateau de fabrication 34, et par exemple fixé sous ce plateau.

Pour protéger de la chaleur rayonnant depuis la surface de travail 16 au moins une des parois de l'enceinte de fabrication 12 qui supporte la source d'énergie ou de chaleur utilisée pour fusionner la poudre de fabrication additive, la machine de fabrication additive selon l'invention comprend une peau intérieure 32.

Plus en détail, cette peau intérieure 32 est placée à l'intérieur de l'enceinte de fabrication 12 devant chaque paroi de cette enceinte supportant la source d'énergie ou de chaleur 14 et à une distance non nulle de chaque paroi de cette enceinte supportant la source d'énergie ou de chaleur. Ainsi, cette peau intérieure 32 permet de créer un volume de circulation V pour un flux de gaz entre la peau intérieure 32 et chaque paroi devant laquelle cette peau intérieure est placée.

En association avec ce volume de circulation V, la machine 10 comprend un dispositif de génération 52 d'un flux de gaz F relié au volume de circulation V. En étant introduit dans le volume de circulation V et en parcourant ce volume V, le flux de gaz F va permettre de refroidir la peau intérieure 32.

De préférence, le gaz utilisé pour générer le flux F est le même gaz qui est utilisé pour inerter l'enceinte de fabrication 12, comme l'argon ou l'azote.

Pour être aussi protégé de la chaleur rayonnant depuis la surface de travail 16, le dispositif de déplacement 40 du dispositif d'étalement 38 de poudre est lui aussi placé derrière la peau intérieure 32 dans le volume de circulation V du flux de gaz F.

La paroi latérale gauche 26 et la paroi latérale droite 28 de l'enceinte de fabrication 12 pouvant prendre la forme de portes, la (ou les) source(s) d'énergie ou de chaleur 14 sont de préférence supportée(s) par la paroi arrière 24, la paroi avant 22 et la paroi supérieure 30. Aussi, afin de protéger ces trois parois de la chaleur rayonnante, la peau intérieure 32 prend la forme d'un tunnel s'étendant entre la paroi latérale gauche 26 et la paroi latérale droite 28, et à une distance D24 non nulle de la paroi arrière, à une distance D22 non nulle de la paroi avant et à une distance D30 non nulle de la paroi supérieure.

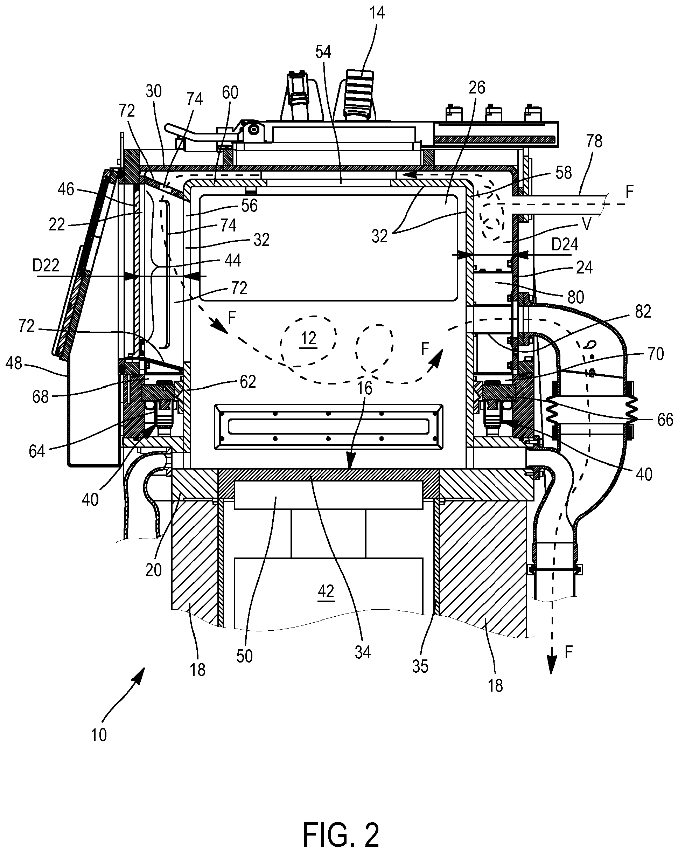

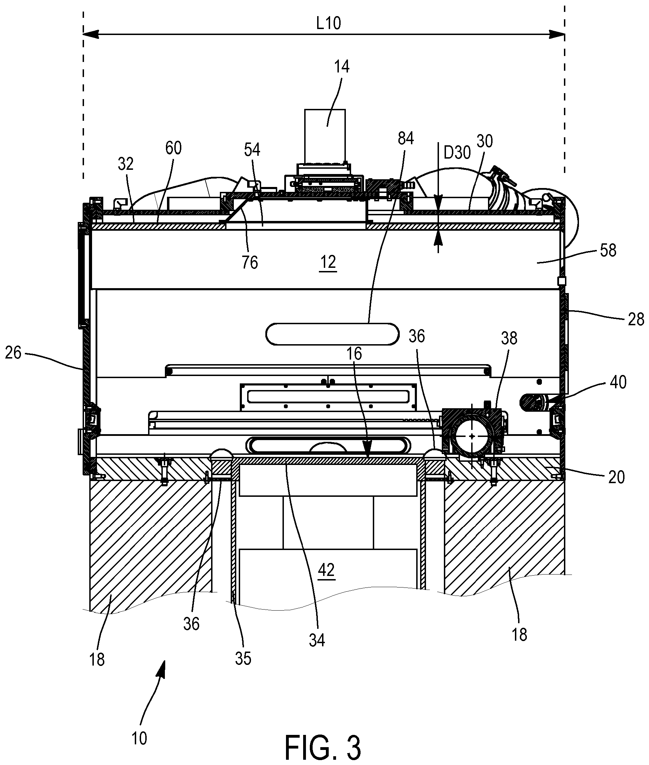

Plus en détail, dans la machine 10 illustrée par les figures 2 et 3, la paroi supérieure 30 de l'enceinte de fabrication 12 reçoit la (ou les) source(s) d'énergie ou de chaleur 14, ainsi que les moyens utilisés pour déplacer le faisceau d'énergie ou de chaleur sur la surface de travail 16. Donc, la peau intérieure 32 comprend une ouverture supérieure 54 prévue devant la (ou les) source(s) d'énergie ou de chaleur 14. Cette ouverture supérieure 54 permet le passage du faisceau d'énergie et/ou de chaleur utilisé pour fusionner les grains de poudre.

De façon similaire, et comme la paroi avant 22 de l'enceinte 12 comprend une ouverture principale 44 refermée par une porte 46, la peau intérieure 32 comprend une ouverture frontale 56 prévue en face de l'ouverture principale 44 de la paroi avant de l'enceinte de fabrication.

Dans un mode de réalisation préféré, la peau intérieure 32 comprend une paroi intérieure arrière 58, une paroi intérieure supérieure 60, et une paroi intérieure avant 62 reliées entre elles de manière à former un tunnel, la paroi intérieure arrière 58 étant placée à l'intérieur de l'enceinte de fabrication 12 devant la paroi arrière 24 de l'enceinte de fabrication, la paroi intérieure supérieure 60 étant placée à l'intérieur de l'enceinte de fabrication devant, et donc sous, la paroi supérieure 30 de l'enceinte de fabrication, et la paroi intérieure avant 62 étant placée à l'intérieur de l'enceinte de fabrication devant la paroi avant 22 de l'enceinte de fabrication.

Dans ce mode de réalisation préféré, la paroi intérieure avant 62 comprend l'ouverture frontale 56 prévue en face de l'ouverture principale 44 de la paroi avant de l'enceinte de fabrication, et la paroi intérieure supérieure 60 comprend l'ouverture supérieure 54 permettant le passage du faisceau d'énergie et/ou de chaleur.

Toujours dans ce mode de réalisation préféré, le dispositif de déplacement 40 du dispositif d'étalement 38 de poudre comprenant deux dispositifs avant 64 et arrière 66 d'entrainement et de guidage en translation du dispositif d'étalement 38, le dispositif avant 64 d'entrainement et de guidage est placé dans un logement 68 se situant entre la paroi intérieure avant 62 de la peau intérieure et la paroi avant 22 de l'enceinte de fabrication, et le dispositif arrière 66 d'entrainement et de guidage est placé dans un logement 70 se situant entre la paroi intérieure arrière 58 de la peau intérieure et la paroi arrière 24 de l'enceinte de fabrication. Le dispositif d'étalement 38 se déplaçant sur la surface de travail 16 située dans le prolongement du plan de travail 20, les logements 68 et 70 se situent en partie inférieure de l'enceinte de fabrication 12, et donc en partie inférieure des parois de l'enceinte et de la peau intérieure. Selon l'invention, ces logements 68 et 70 appartiennent au volume de circulation V du flux de gaz F.

En raison de la présence de l'ouverture principale 44 dans la paroi avant de l'enceinte de fabrication et de l'ouverture frontale 56 dans la paroi intérieure avant 62 de la peau intérieure, une cloison 72 relie l'ouverture principale 44 de la paroi avant de l'enceinte de fabrication à l'ouverture frontale 56 de la paroi intérieure avant 62. Aussi, le volume de circulation V s'étend autour de cette cloison 72 entre la paroi avant de l'enceinte de fabrication et la paroi intérieure avant 62 de la peau intérieure. Afin de permettre au flux de gaz F de pénétrer dans l'enceinte de fabrication 12, cette cloison 72 comprend différentes lumières 74 prévues tout autour de ces ouvertures 44,56.

En raison de la présence de l'ouverture supérieure 54 dans la paroi intérieure supérieure 60 de de la peau intérieure, une cloison 76 relie l'ouverture supérieure 54 à la paroi supérieure 30 de l'enceinte de fabrication. Aussi, le volume de circulation V s'étend autour de cette cloison 76 entre la paroi supérieure 30 de l'enceinte de fabrication et la paroi intérieure supérieure 60 de la peau intérieure.

En raison de la présence de l'ouverture principale 44 dans la paroi avant de l'enceinte de fabrication et de l'ouverture frontale 56 dans la paroi intérieure avant 62 de la peau intérieure et du fait que la paroi supérieure 30 de l'enceinte de fabrication 12 reçoit la (ou les) source(s) d'énergie ou de chaleur 14 et que la peau intérieure 32 comprend une ouverture supérieure 54 prévue devant la source d'énergie ou de chaleur 14, l'invention prévoit de préférence que le flux de gaz F issu du dispositif de génération 52 est introduit entre la paroi arrière 24 de l'enceinte de fabrication 12 et la paroi intérieure arrière 58 de la peau intérieure. A cet effet, un conduit d'introduction 78 relié au dispositif de génération 52 du flux de gaz F débouche dans la paroi arrière 24 de l'enceinte de fabrication 12.

De préférence, un compartiment électrique 80, c'est-à-dire destiné au logement de divers câbles électriques, étant prévu entre la paroi arrière 24 de l'enceinte de fabrication 12 et la paroi intérieure arrière 58 de la peau intérieure et au-dessus du logement 70 recevant le dispositif arrière 66 d'entrainement et de guidage, le conduit 78 débouche en partie supérieure de la paroi arrière 24 de l'enceinte de fabrication 12.

La paroi intérieure avant 62 de la peau intérieure étant ouverte, le volume de circulation V s'étend entre la paroi arrière 24 de l'enceinte de fabrication et la paroi intérieure arrière 58 de la peau intérieure, puis entre la paroi supérieure 30 de l'enceinte de fabrication et la paroi intérieure supérieure 60 de la peau intérieure, puis entre la paroi avant 22 de l'enceinte de fabrication et la paroi intérieure avant 62 de la peau intérieure pour finalement déboucher à l'intérieur de la peau intérieure 32 et au-dessus de la surface de travail 16, notamment via les lumières prévues dans la cloison 72.

Ainsi défini, le volume de circulation V permet donc au flux de gaz F de circuler entre la paroi arrière 24 de l'enceinte de fabrication et la paroi intérieure arrière 58 de la peau intérieure, puis entre la paroi supérieure 30 de l'enceinte de fabrication et la paroi intérieure supérieure 60 de la peau intérieure, puis entre la paroi avant 22 de l'enceinte de fabrication et la paroi intérieure avant 62 de la peau intérieure pour finalement arriver à l'intérieur de la peau intérieure 32 et au-dessus de la surface de travail 16.

Grâce au volume de circulation V défini par les parois intérieures de la peau intérieure, le flux de gaz F peut donc protéger efficacement contre la chaleur les trois parois de l'enceinte supportant la (ou les) source(s) de chaleur ou d'énergie 14.

Afin d'évacuer le flux de gaz F ayant circulé au-dessus de la surface de travail 16 et ayant été réchauffé par la chaleur C rayonnant depuis cette surface de travail 16, un conduit d'aspiration 82 du flux de gaz F traverse la paroi arrière 24 de l'enceinte de fabrication et la paroi intérieure arrière 58 de la peau intérieure pour déboucher à l'intérieur de la peau intérieure 32 et au-dessus de la surface de travail 16. Plus en détail et pour une meilleure aspiration du flux de gaz F, le conduit d'aspiration 82 débouche dans la paroi intérieure arrière 58 de la peau intérieure sous la forme d'une bouche 84 s'étendant dans la longueur L10 de la machine 10.

De préférence, le conduit d'aspiration 82 traverse le compartiment électrique 80.

Afin d'avoir un circuit fermé de refroidissement, le conduit d'aspiration 82 est relié au dispositif de génération 52 du flux de gaz F.

Entre le conduit d'aspiration 82 et le conduit d'introduction 78, le dispositif de génération 52 comprend de préférence un dispositif de filtration 86 car la fusion de la poudre génère de nombreuses particules nuisibles au bon fonctionnement de la machine 10, puis un échangeur de chaleur 88 pour refroidir le gaz filtré, puis un ventilateur 90 pour générer le flux de gaz F refroidi destiné à être introduit entre les parois de l'enceinte de fabrication 12 et les parois intérieures de la peau intérieure, et enfin une vanne 92 permettant de fermer le circuit.

De préférence, pour assurer un bon remplissage du volume de circulation V, le flux de gaz F est turbulent. A cet effet, le gaz du flux F est introduit dans le volume de circulation V avec une vitesse comprise entre 5 et 15 m/s et avec un débit compris entre 100 et 300 m³/h, la vitesse et le débit du flux F variant entre ces valeurs en fonction du volume de l'enceinte de fabrication 12.

En parallèle du circuit du flux de gaz F de refroidissement, le dispositif de génération 52 peut aussi comprendre un circuit d'un second flux de gaz F' destiné à évacuer les fumées issues de la fusion en cours de fabrication. A cet effet, un conduit 94 est relié au ventilateur 90 du dispositif de génération 52 via une vanne 96. Ce conduit 94 traverse la partie inférieure de la paroi avant 22 de l'enceinte 12 et la partie inférieure de la paroi intérieure avant 62 de la peau intérieure 32 et débouche de manière rasante au-dessus de la surface de travail 16 et à l'intérieur de la peau intérieure 32.

Afin d'avoir un circuit fermé d'évacuation des fumées, un autre conduit 98 est relié au filtre 86 du dispositif de génération 52. Cet autre conduit 98 traverse la partie inférieure de la paroi arrière 24 de l'enceinte 12 et la partie inférieure de la paroi intérieure arrière 58 de la peau intérieure 32 et débouche de manière rasante au-dessus de la surface de travail 16 et à l'intérieur de la peau intérieure 32.

De préférence, le flux de gaz F' d'évacuation des fumées est laminaire. A cet effet, le gaz du flux F' est introduit dans le volume de circulation V avec une vitesse comprise entre 1 et 5 m/s et avec un débit compris entre 20 et 100 m³/h, la vitesse et le débit du flux F variant entre ces valeurs en fonction du volume de l'enceinte de fabrication 12.

## Revendications

1. Machine de fabrication additive (10), cette machine de fabrication additive comprenant une enceinte de fabrication (12) à l'intérieur de laquelle au moins une source de chaleur ou d'énergie (14) est utilisée pour fusionner de la poudre de fabrication additive sur une surface de travail (16), l'enceinte de fabrication étant formée par au moins un plan de travail (20), une paroi avant (22), une paroi arrière (24), une paroi latérale gauche (26), une paroi latérale droite (28), et une paroi supérieure (30), au moins une de ces parois supportant la source d'énergie ou de chaleur (14) utilisée pour fusionner la poudre de fabrication additive, la machine de fabrication additive (10) étant **caractérisée en ce qu'**elle comprend une peau intérieure (32) placée à l'intérieur de l'enceinte de fabrication (12) devant chaque paroi de cette enceinte supportant la source d'énergie ou de chaleur (14) et à une distance (D1,D2,D3) non nulle de chaque paroi supportant la source d'énergie ou de chaleur (14) de manière à créer un volume de circulation (V) pour un flux de gaz (F) entre la peau intérieure (32) et chaque paroi de cette enceinte devant laquelle cette peau intérieure est placée, et **en ce que** la machine de fabrication additive (10) comprend un dispositif de génération (52) du flux de gaz (F) relié au volume de circulation (V), chaque paroi supportant la source d'énergie ou de chaleur étant moins soumise à la chaleur rayonnant depuis la surface de travail et étant moins susceptible de se déformer grâce à la peau intérieure et au flux de gaz qui vient refroidir la peau intérieure.

2. Machine de fabrication additive (10) selon la revendication 1, dans laquelle, la machine comprenant un dispositif d'étalement (38) de poudre sur la surface de travail (16) et un dispositif de déplacement (40) de ce dispositif d'étalement au-dessus de la surface de travail, le dispositif de déplacement est placé derrière la peau intérieure (32) dans le volume de circulation (V) du flux de gaz (F).

3. Machine de fabrication additive (10) selon la revendication 1 ou la revendication 2, dans laquelle, la source d'énergie ou de chaleur (14) étant supportée par la paroi arrière (24), la paroi avant (22) et la paroi supérieure (30) de l'enceinte (12), la peau intérieure (32) prend la forme d'un tunnel s'étendant entre la paroi latérale gauche (26) et la paroi latérale droite (28), et à une distance non nulle (D24) de la paroi arrière, à une distance (D22) non nulle de la paroi avant et à une distance (D30) non nulle de la paroi supérieure.

4. Machine de fabrication additive (10) selon la revendication 3, dans laquelle, la paroi supérieure (30) de l'enceinte de fabrication (12) recevant la source d'énergie ou de chaleur (14), la peau intérieure (32) comprend une ouverture supérieure (54) prévue devant la source d'énergie ou de chaleur.

5. Machine de fabrication additive (10) selon la revendication 3 ou la revendication 4, dans laquelle, la paroi avant (22) de l'enceinte de fabrication (12) comprenant une ouverture principale (44) refermée par une porte (46), la peau intérieure (32) comprend une ouverture frontale (56) prévue en face de l'ouverture (44) de la paroi avant de l'enceinte de fabrication.

6. Machine de fabrication additive (10) selon l'une des revendications 3 à 5, dans laquelle la peau intérieure (32) comprend une paroi intérieure arrière (58), une paroi intérieure supérieure (60), et une paroi intérieure avant (62) reliées entre elles de manière à former un tunnel, la paroi intérieure arrière (58) étant placée à l'intérieur de l'enceinte de fabrication (12) devant la paroi arrière (24) de l'enceinte de fabrication, la paroi intérieure supérieure (60) étant placée à l'intérieur de l'enceinte de fabrication devant, et donc sous, la paroi supérieure (30) de l'enceinte de fabrication, et la paroi intérieure avant (62) étant placée à l'intérieur de l'enceinte de fabrication devant la paroi avant (22) de l'enceinte de fabrication.

7. Machine de fabrication additive (10) selon la revendication 6, dans laquelle le flux de gaz (F) issu du dispositif de génération (52) est introduit entre la paroi arrière (24) de l'enceinte de fabrication (12) et la paroi intérieure arrière (58) de la peau intérieure.

8. Machine de fabrication additive (10) selon la revendication 7, dans laquelle, la paroi intérieure avant (62) de la peau intérieure étant ouverte, le volume de circulation (V) s'étend entre la paroi arrière (24) de l'enceinte de fabrication et la paroi intérieure arrière (58) de la peau intérieure, puis entre la paroi supérieure (30) de l'enceinte de fabrication et la paroi intérieure supérieure (60) de la peau intérieure, puis entre la paroi avant (22) de l'enceinte de fabrication et la paroi intérieure avant (62) de la peau intérieure pour finalement déboucher à l'intérieur de la peau intérieure (32) et au-dessus de la surface de travail (16).

9. Machine de fabrication additive (10) selon l'une des revendications 6 à 8, dans laquelle un conduit d'aspiration (82) du flux de gaz (F) traverse la paroi arrière (24) de l'enceinte de fabrication et la paroi intérieure arrière (58) de la peau intérieure pour déboucher à l'intérieur de la peau intérieure (32) et au-dessus de la surface de travail (16).

10. Machine de fabrication additive (10) selon la revendication 9, dans laquelle le conduit d'aspiration (82) est relié au dispositif de génération (52) du flux de gaz (F).

11. Machine de fabrication additive (10) selon la revendication 10, dans laquelle le dispositif de génération (52) du flux de gaz comprend un échangeur de chaleur (88) pour refroidir le gaz aspiré via le conduit d'aspiration (82).

## Patentansprüche

1. Maschine zur generativen Fertigung (10), wobei diese Maschine zur generativen Fertigung eine Fertigungskammer (12) beinhaltet, innerhalb derer mindestens eine Wärme- oder Energiequelle (14) dazu verwendet wird, Pulver zur generativen Fertigung auf einer Arbeitsoberfläche (16) zu schmelzen, wobei die Fertigungskammer durch mindestens eine Arbeitsfläche (20), eine Vorderwand (22), eine Rückwand (24), eine linke Seitenwand (26), eine rechte Seitenwand (28) und eine obere Wand (30) gebildet ist, wobei mindestens eine dieser Wände die Energie- oder Wärmequelle (14) trägt, die dazu verwendet wird, das Pulver zur generativen Fertigung zu schmelzen, wobei die Maschine zur generativen Fertigung (10) **dadurch gekennzeichnet ist, dass** sie eine Innenhaut (32) beinhaltet, die innerhalb der Fertigungskammer (12) vor jeder Wand dieser Kammer, die die Energie- oder Wärmequelle (14) trägt, und in einem Abstand (D1, D2, D3) ungleich Null von jeder Wand, die die Energie- oder Wärmequelle (14) trägt, angeordnet ist, um ein Zirkulationsvolumen (V) für einen Gasstrom (F) zwischen der Innenhaut (32) und jeder Wand dieser Kammer, vor der diese Innenhaut angeordnet ist, zu schaffen, und dass die Maschine zur generativen Fertigung (10) eine Vorrichtung zur Erzeugung (52) des Gasstroms (F) beinhaltet, die mit dem Zirkulationsvolumen (V) verbunden ist, wobei jede Wand, die die Energie- oder Wärmequelle trägt, dank der Innenhaut und des Gasstroms, der die Innenhaut kühlt, der Wärme, die von der Arbeitsoberfläche abstrahlt, weniger ausgesetzt ist und weniger zum Verformen neigt.

2. Maschine zur generativen Fertigung (10) nach Anspruch 1, wobei die Maschine eine Vorrichtung zum Verteilen (38) von Pulver auf der Arbeitsoberfläche (16) und eine Vorrichtung zum Bewegen (40) dieser Verteilungsvorrichtung oberhalb der Arbeitsoberfläche beinhaltet und die Bewegungsvorrichtung hinter der Innenhaut (32) in dem Zirkulationsvolumen (V) des Gasstroms (F) angeordnet ist.

3. Maschine zur generativen Fertigung (10) nach Anspruch 1 oder Anspruch 2, wobei die Energie- oder Wärmequelle (14) durch die Rückwand (24), die Vorderwand (22) und die obere Wand (30) der Kammer (12) getragen wird und die Innenhaut (32) die Form eines Tunnels annimmt, der sich zwischen der linken Seitenwand (26) und der rechten Seitenwand (28) und in einem Abstand ungleich Null (D24) von der Rückwand, in einem Abstand (D22) ungleich Null von der Vorderwand und in einem Abstand (D30) ungleich Null von der oberen Wand erstreckt.

4. Maschine zur generativen Fertigung (10) nach Anspruch 3, wobei die obere Wand (30) der Fertigungskammer (12) die Energie- oder Wärmequelle (14) aufnimmt und die Innenhaut (32) eine obere Öffnung (54) beinhaltet, die vor der Energie- oder Wärmequelle vorgesehen ist.

5. Maschine zur generativen Fertigung (10) nach Anspruch 3 oder Anspruch 4, wobei die Vorderwand (22) der Fertigungskammer (12) eine Hauptöffnung (44) beinhaltet, die durch eine Tür (46) verschlossen wird, und die Innenhaut (32) eine Frontöffnung (56) beinhaltet, die gegenüber der Öffnung (44) der Vorderwand der Fertigungskammer vorgesehen ist.

6. Maschine zur generativen Fertigung (10) nach einem der Ansprüche 3 bis 5, wobei die Innenhaut (32) eine hintere Innenwand (58), eine obere Innenwand (60) und eine vordere Innenwand (62) beinhaltet, die untereinander so verbunden sind, dass sie einen Tunnel bilden, wobei die hintere Innenwand (58) innerhalb der Fertigungskammer (12) vor der Rückwand (24) der Fertigungskammer angeordnet ist, die obere Innenwand (60) innerhalb der Fertigungskammer vor, und somit unter, der oberen Wand (30) der Fertigungskammer angeordnet ist und die vordere Innenwand (62) innerhalb der Fertigungskammer vor der Vorderwand (22) der Fertigungskammer angeordnet ist.

7. Maschine zur generativen Fertigung (10) nach Anspruch 6, wobei der Gasstrom (F), der aus der Erzeugungsvorrichtung (52) stammt, zwischen der Rückwand (24) der Fertigungskammer (12) und der hinteren Innenwand (58) der Innenhaut zugeführt wird.

8. Maschine zur generativen Fertigung (10) nach Anspruch 7, wobei die vordere Innenwand (62) der Innenhaut offen ist und sich das Zirkulationsvolumen (V) zwischen der Rückwand (24) der Fertigungskammer und der hinteren Innenwand (58) der Innenhaut, dann zwischen der oberen Wand (30) der Fertigungskammer und der oberen Innenwand (60) der Innenhaut und dann zwischen der Vorderwand (22) der Fertigungskammer und der vorderen Innenwand (62) der Innenhaut erstreckt, um schließlich innerhalb der Innenhaut (32) und oberhalb der Arbeitsoberfläche (16) zu münden.

9. Maschine zur generativen Fertigung (10) nach einem der Ansprüche 6 bis 8, wobei eine Ansaugleitung (82) für den Gasstrom (F) durch die Rückwand (24) der Fertigungskammer und die hintere Innenwand (58) der Innenhaut verläuft, um innerhalb der Innenhaut (32) und oberhalb der Arbeitsoberfläche (16) zu münden.

10. Maschine zur generativen Fertigung (10) nach Anspruch 9, wobei die Ansaugleitung (82) mit der Erzeugungsvorrichtung (52) für den Gasstrom (F) verbunden ist.

11. Maschine zur generativen Fertigung (10) nach Anspruch 10, wobei die Erzeugungsvorrichtung (52) für den Gasstrom einen Wärmetauscher (88) beinhaltet, um das durch die Ansaugleitung (82) angesaugte Gas zu kühlen.

## Claims

1. Additive manufacturing machine (10), this additive manufacturing machine comprising a manufacturing chamber (12) inside which at least one source of heat or energy (14) is used to melt additive manufacturing powder on a working surface (16), the manufacturing chamber being formed by at least one working plane (20), a front wall (22), a rear wall (24), a left-hand lateral wall (26), a right-hand lateral wall (28), and an upper wall (30), at least one of these walls supporting the source of energy or heat (14) used to melt the additive manufacturing powder, the additive manufacturing machine (10) being **characterized in that** it comprises an inner skin (32) that is positioned inside the manufacturing chamber (12) in front of each wall of this chamber supporting the source of energy or heat (14) and at a non-zero distance (D1, D2, D3) from each wall supporting the source of energy or heat (14) so as to create a circulation volume (V) for a flow of gas (F) between the inner skin (32) and each wall of this chamber in front of which this inner skin is positioned, and **in that** the additive manufacturing machine (10) comprises a device (52) for generating the flow of gas (F) that is connected to the circulation volume (V), each wall supporting the source of energy or heat being subjected less to the heat radiating from the working surface and being thus less likely to deform by virtue of the inner skin and the flow of gas which cools the inner skin.

2. Additive manufacturing machine (10) according to Claim 1, wherein, with the machine comprising a device (38) for spreading powder over the working surface (16) and a device (40) for moving this spreading device above the working surface, the moving device is positioned behind the inner skin (32) in the circulation volume (V) of the flow of gas (F).

3. Additive manufacturing machine (10) according to Claim 1 or Claim 2, wherein, with the source of energy or heat (14) being supported by the rear wall (24), the front wall (22) and the upper wall (30) of the chamber (12), the inner skin (32) takes the form of a tunnel extending between the left-hand lateral wall (26) and the right-hand lateral wall (28) and at a non-zero distance (D24) from the rear wall, at a non-zero distance (D22) from the front wall and at a non-zero distance (D30) from the upper wall.

4. Additive manufacturing machine (10) according to Claim 3, wherein, with the upper wall (30) of the manufacturing chamber (12) holding the source of energy or heat (14), the inner skin (32) comprises an upper opening (54) provided in front of the source of energy or heat.

5. Additive manufacturing machine (10) according to Claim 3 or Claim 4, wherein, with the front wall (22) of the manufacturing chamber (12) comprising a main opening (44) closed by a door (46), the inner skin (32) comprises a frontal opening (56) provided opposite the opening (44) in the front wall of the manufacturing chamber.

6. Additive manufacturing machine (10) according to one of Claims 3 to 5, wherein the inner skin (32) comprises a rear inner wall (58), an upper inner wall (60), and a front inner wall (62) that are joined together so as to form a tunnel, the rear inner wall (58) being positioned inside the manufacturing chamber (12) in front of the rear wall (24) of the manufacturing chamber, the upper inner wall (60) being positioned inside the manufacturing chamber in front of, and thus beneath, the upper wall (30) of the manufacturing chamber, and the front inner wall (62) being positioned inside the manufacturing chamber in front of the front wall (22) of the manufacturing chamber.

7. Additive manufacturing machine (10) according to Claim 6, wherein the flow of gas (F) coming from the generating device (52) is introduced between the rear wall (24) of the manufacturing chamber (12) and the rear inner wall (58) of the inner skin.

8. Additive manufacturing machine (10) according to Claim 7, wherein, with the front inner wall (62) of the inner skin being open, the circulation volume (V) extends between the rear wall (24) of the manufacturing chamber and the rear inner wall (58) of the inner skin, then between the upper wall (30) of the manufacturing chamber and the upper inner wall (60) of the inner skin, then between the front wall (22) of the manufacturing chamber and the front inner wall (62) of the inner skin, finally opening out through the inner skin (32) and above the working surface (16).

9. Additive manufacturing machine (10) according to one of Claims 6 to 8, wherein an intake duct (82) for the flow of gas (F) passes through the rear wall (24) of the manufacturing chamber and the rear inner wall (58) of the inner skin, before opening out through the inner skin (32) and above the working surface (16).

10. Additive manufacturing machine (10) according to Claim 9, wherein the intake duct (82) is connected to the device (52) for generating the flow of gas (F).

11. Additive manufacturing machine (10) according to Claim 10, wherein the device (52) for generating the flow of gas comprises a heat exchanger (88) for cooling the gas drawn in via the intake duct (82).
